# EUROPEAN PATENT APPLICATION

(11) **EP 4 672 576 A1**
(43) Date of publication of application: **31.12.2025**
(21) Application number: 24759986.3
(22) Date of filing: 22.01.2024
(51) Int. Cl.: H02K 55/04

(54) **ROTOR OF SUPERCONDUCTING ROTATING ELECTRICAL MACHINE, AND SUPERCONDUCTING ROTATING ELECTRICAL MACHINE**

(30) Priority: 24.02.2023 JP 2023027409
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: TAKAHASHI, Masahiko, Kawasaki-shi, Kanagawa 212-0013 (JP); NAKAMA, Keita, Kawasaki-shi, Kanagawa 212-0013 (JP); FUCHIMOTO, Ryo, Kawasaki-shi, Kanagawa 212-0013 (JP); KURIYAMA, Toru, Kawasaki-shi, Kanagawa 212-0013 (JP); TAKAGI, Norikazu, Kawasaki-shi, Kanagawa 212-0013 (JP); UENO, Koki, Kawasaki-shi, Kanagawa 212-0013 (JP)
(74) Representative: Hoffmann Eitle
(86) International application number: PCT/JP2024/001642
(87) International publication number: WO 2024/176679

(57) **Abstract**

A rotor of a superconducting rotating electrical machine, according to an embodiment, includes a superconducting coil (31), a current lead (33) configured to energize the superconducting coil (31), a heat transfer unit (32c) arranged for a rotor core (35) and thermally connected to the superconducting coil (31) and the current lead (33), a supply pipe (32a) configured to supply refrigerant gas into the rotor core (35), and a return pipe (32b) arranged on an outer diameter side of the supply pipe (32a) and configured to discharge the refrigerant gas that has cooled the superconducting coil (31) via the heat transfer unit (32c) on the rotor core (35) side, wherein the current lead (33) is configured to be cooled by the refrigerant gas having cooled the superconducting coil (31).

## Description

### FIELD

Embodiments of the present invention relate to a rotor of a superconducting rotating electrical machine and a superconducting rotating electrical machine.

### BACKGROUND

In recent years, there has been demand for carbon neutrality as a countermeasure against global warming. Under such circumstances, a superconducting rotating electrical machine for an electric aircraft and the like has been developed. In a system using a superconducting rotating electrical machine, a superconducting coil is cooled to an extremely low temperature. The cooling method is roughly classified into two methods.

One of the methods is to install a small refrigerator for each superconducting coil and directly connect the refrigerator with the superconducting coil. The other method is to arrange a large refrigerator in the center and circulate a refrigerant cooled by the refrigerator. In general, the larger the refrigerator, the higher the efficiency; thus, the latter method is superior in terms of efficiency. A method using liquid helium is known as the method of cooling a superconducting rotating electrical machine by circulating a refrigerant.

For a system using a superconducting rotating electrical machine for an electric aircraft and the like, a system in which a high-temperature superconducting coil that is easy to cool is cooled to about 20 K has been considered from the viewpoint of reduction in size and weight, etc. In the cooling to about 20 K, helium gas, liquid hydrogen, or the like is used as a refrigerant. A method using helium gas will be described below.

In a system using a liquid refrigerant, the refrigerant temperature is constant while the liquid is present; thus, circulating a refrigerant that exceeds a heat load is sufficient. In the case of circulating a gas as a refrigerant, however, the temperature of the refrigerant gas rises due to the heat received by the refrigerant gas, and it is thus necessary to devise a way to prevent the temperature of the refrigerant gas from becoming too high. On the other hand, if normal conduction transition occurs even in a part of the superconducting coil, the entire superconducting coil undergoes normal conduction transition, and it is thus necessary to keep the maximum coil temperature of the superconducting coil at a critical temperature or lower. If heat penetration occurs before the refrigerant gas reaches the coil, the temperature of the refrigerant gas greatly rises, and a maximum coil temperature becomes high. In such a case, it is difficult to perform stable operation.

For such reasons as explained above, it is desired to provide a rotor of a superconducting rotating electrical machine and a superconducting rotating electrical machine that can reduce a maximum coil temperature and perform stable operation.

### SUMMARY

A rotor of a superconducting rotating electrical machine, according to an embodiment, includes a superconducting coil; a current lead configured to energize the superconducting coil; a heat transfer unit arranged for a rotor core and thermally connected to the superconducting coil and the current lead; a supply pipe configured to supply refrigerant gas into the rotor core; and a return pipe arranged on an outer diameter side of the supply pipe and configured to discharge the refrigerant gas that has cooled the superconducting coil via the heat transfer unit on the rotor core side, wherein the current lead is configured to be cooled by the refrigerant gas having cooled the superconducting coil.

### BRIEF DESCRIPTION OF THE DRAWINGS

FIG. 1 is a conceptual diagram showing an example of a configuration of an entire system including a superconducting rotating electrical machine according to an embodiment.
FIG. 2 is a conceptual diagram showing an example of a configuration of the superconducting rotating electrical machine 1 shown in FIG. 1.
FIG. 3 is a cross-sectional diagram showing an example of a configuration of the rotary unit 11 shown in FIG. 2.
FIG. 4 is a cross-sectional diagram showing an example of a cross-sectional shape of the rotor 11a shown in FIG. 3 taken along the line A-A.
FIG. 5 is a conceptual diagram showing an example of an electrical connection relationship between the superconducting coil 31 and the brush 12c shown in FIG. 3.
FIG. 6 is a cross-sectional diagram showing an example of a structure near the pipe communication portion Q shown in FIG. 2.
FIG. 7 is a cross-sectional diagram showing an example of a cross-sectional shape of the structure shown in FIG. 6 taken along the line B-B.
FIG. 8 is a cross-sectional diagram showing an example of a cross-sectional shape of the structure shown in FIG. 6 taken along the line C-C.

### DETAILED DESCRIPTION

Hereinafter, an embodiment will be described with reference to the drawings.

### (System Configuration)

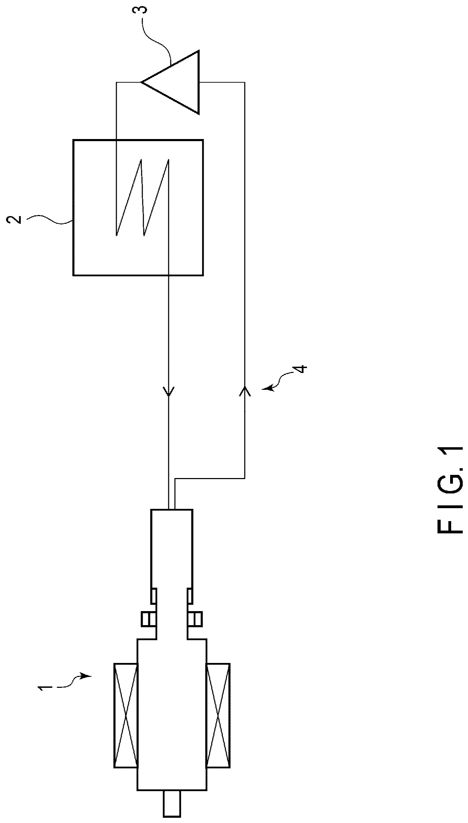

FIG. 1 is a conceptual diagram showing an example of a configuration of an entire system including a superconducting rotating electrical machine according to an embodiment.

The system shown in FIG. 1 includes a superconducting rotating electrical machine 1 and a gas circulation cooling system 4 including a cooling source 2 and a low-temperature blower 3.

The superconducting rotating electrical machine 1 includes a high-temperature superconducting coil and has a mechanism for cooling the superconducting coil using a refrigerant gas such as helium gas supplied from the outside of the machine to the inside.

The gas circulation cooling system 4 circulates a refrigerant gas such as helium gas with the superconducting rotating electrical machine 1 as a cooling target. The refrigerant gas is cooled to an extremely low temperature by the cooling source 2 and sent out to the superconducting rotating electrical machine 1 by the low-temperature blower 3. The refrigerant gas which has cooled the superconducting coil and whose temperature has risen is discharged from the superconducting rotating electrical machine 1. The refrigerant gas whose temperature has risen is sent out to the cooling source 2 through the low-temperature blower 3, and cooled again by the cooling source 2.

### (Configuration of Superconducting Rotating Electrical Machine 1)

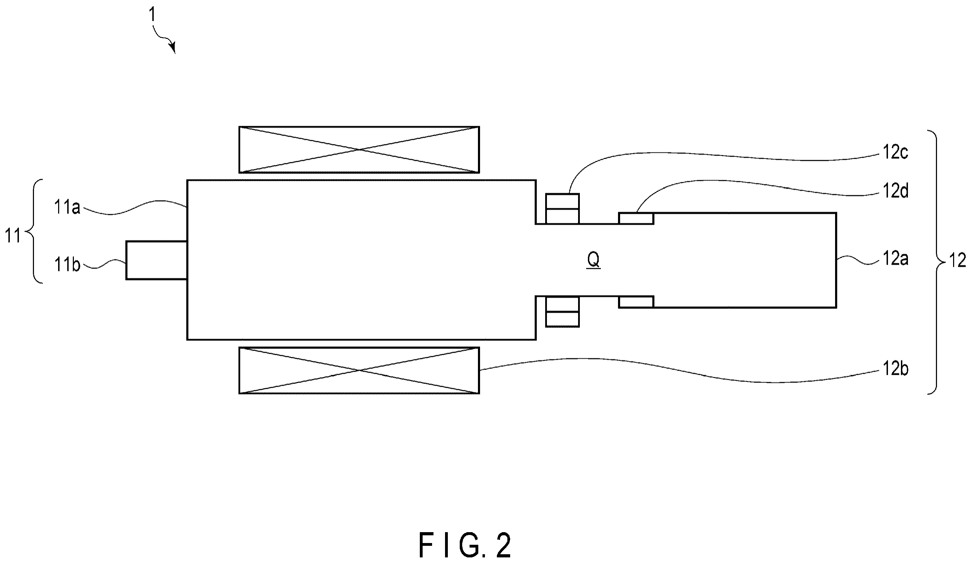

FIG. 2 is a conceptual diagram showing an example of a configuration of the superconducting rotating electrical machine 1 shown in FIG. 1.

As shown in FIG. 2, the superconducting rotating electrical machine 1 includes a rotary unit 11 including a rotor 11a and a rotary shaft (drive shaft) 11b, and a fixing unit 12 including a refrigerant supplier 12a, a stator coil 12b, a brush 12c, and a sealer 12d. A pipe communication portion Q through which the pipes of the rotary unit 11 and the fixing unit 12 communicate with each other is provided between the rotary unit 11 and the fixing unit 12. The details of the pipe communication portion Q will be described later.

The rotor 11a rotates about the rotary shaft (drive shaft) 11b. The refrigerant supplier 12a supplies the refrigerant gas sent from the cooling source 2 to the inside of the rotating rotor 11a, and returns the used refrigerant gas returned from the rotor 11a side to the cooling source 2 through the low-temperature blower 3. The stator coil 12b is arranged on the outer diameter side of the rotor 11a. The brush 12c conducts electricity by coming into contact with a slip ring on the rotating rotor 11a side. The sealer 12d prevents leakage of the refrigerant gas that moves back and forth between the pipe on the rotary unit 11 side and the pipe on the fixing unit 12 side.

### (Configuration of Rotary Unit 11)

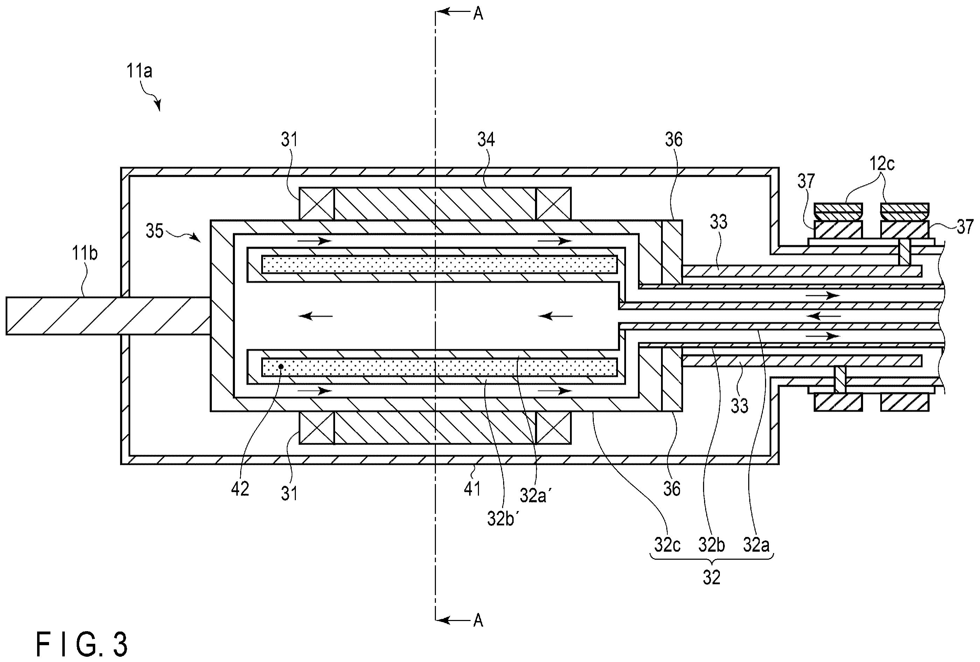

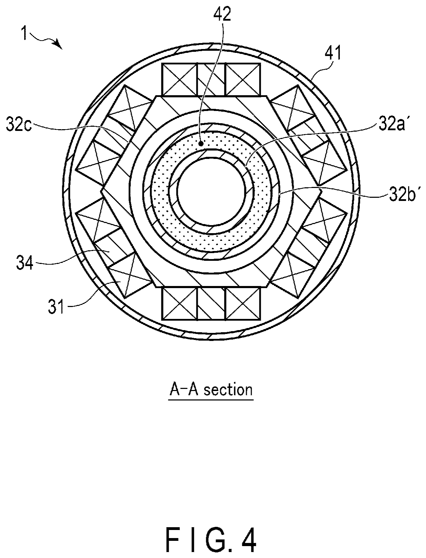

FIG. 3 is a cross-sectional diagram showing an example of a configuration of the rotary unit 11 shown in FIG. 2. FIG. 4 is a cross-sectional diagram showing an example of a cross-sectional shape of the rotor 11a shown in FIG. 3 taken along the line A-A. Here, in order to facilitate understanding of the structures of the main parts, some of the dimensions of the respective parts shown in the drawings are made larger or smaller than the actual dimensions. Thus, the dimensional relationship between the respective parts shown in the drawings differs from the actual one.

As shown in FIGS. 3 and 4, the rotary unit 11 includes a high-temperature superconducting coil 31 (hereinafter referred to as "superconducting coil 31") that generates a magnetic field, includes, as a gas circulation cooling mechanism 32 that circulates a refrigerant gas, not only a supply pipe 32a, a return pipe 32b, and a heat transfer unit 32c, but also a supply passage wall 32a' and a return passage wall 32b', and further includes various elements such as a current lead 33, a heat transfer plate 34, a rotor core 35, a current lead cooling stage 36, a slip ring 37, a vacuum container 41, and a heat insulator 42. These elements are basically arranged inside the vacuum container 41; however, some of them are arranged outside the vacuum container 41, as seen in a part of the rotary shaft 11b and the slip ring 37.

The current lead 33 for energizing the superconducting coil 31 through a lead wire (not shown) is electrically connected to the superconducting coil 31. The current lead 33 is electrically connected to the slip ring 37. The slip ring 37 conducts electricity by coming into contact with the brush 12c on the fixing unit 12 side.

The superconducting coil 31 and the current lead 33 are cooled by a refrigerant gas flowing through the gas circulation cooling mechanism 32.

The gas circulation cooling mechanism 32 includes the supply pipe 32a, the return pipe 32b, and the heat transfer unit 32c as main elements, and further includes the supply passage wall 32a', the return passage wall 32b', and the heat insulator 42 that are arranged on the inner diameter side of the heat transfer unit 32c.

The supply pipe 32a and the return pipe 32b are concentrically arranged on one side (the side opposite to the side on which the rotary shaft 11b is arranged) of the rotor core 35 in the longitudinal direction. The supply pipe 32a and the return pipe 32b are arranged such that their longitudinal directions are parallel to the axial direction of the rotary shaft 11b, and that the return pipe 32b is arranged to surround the supply pipe 32a on the outer diameter side of the supply pipe 32a.

The supply pipe 32a supplies the refrigerant gas sent from the fixing unit 12 side to the inside of the rotor core 35. The return pipe 32b discharges, to the fixing unit 12 side, the refrigerant gas that has cooled the superconducting coil 31 on the rotor core 35 side via the heat transfer unit 32c.

The superconducting coil 31 is arranged on the heat transfer unit 32c and thermally connected to the heat transfer plate 34. The heat transfer plate 34 is arranged on the heat transfer unit 32c. The heat transfer unit 32c is provided for the rotor core 35. The heat transfer unit 32c may be configured as a portion of the rotor core 35.

The current lead 33 is thermally connected to the current lead cooling stage 36. The current lead cooling stage 36 is thermally connected to a surface of an end portion of the heat transfer unit 32c in the axial direction of the rotor (an end portion closer to the return pipe 32b of both of the end portions in the axial direction of the rotor) in order to cool the current lead 33.

That is, the heat transfer unit 32c is thermally connected directly to the superconducting coil 31, is thermally connected to the superconducting coil 31 via the heat transfer plate 34, and is thermally connected to the current lead 33 via the current lead cooling stage 36. In this case, the current lead cooling stage 36 and the current lead 33 are located further downstream in the passage through which the refrigerant gas flows than the superconducting coil 31, and the current lead 33 is cooled via the current lead cooling stage 36 by the refrigerant gas that has cooled the superconducting coil 31.

The rotor core 35 includes the supply passage wall 32a', the return passage wall 32b', and the heat insulator 42 inside the rotor core 35.

The supply passage wall 32a' forms a passage through which the refrigerant gas supplied from the supply pipe 32a flows. Together with the heat transfer unit 32c, the return passage wall 32b' forms a passage through which the refrigerant gas to be sent to the return pipe 32b flows. The heat insulator 42 is arranged between the supply passage wall 32a' and the return passage wall 32b', and forms a vacuum heat insulating layer. The heat insulator 42 insulates the refrigerant gas supplied from the supply pipe 32a from the refrigerant gas sent to the return pipe 32b.

The refrigerant gas supplied from the refrigerant supplier 12a side to the rotor 11a side shown in FIG. 2 passes through the supply pipe 32a, enters the supply passage surrounded by the supply passage wall 32a' in the rotor core 35, and flows toward the rotary shaft 11b side. At this time, since the heat insulator 42 is on the outer diameter side of the supply passage wall 32a', heat penetration from the outer diameter side is suppressed. Thereafter, the refrigerant gas advances while changing its direction to the circumferential direction of the rotor core 35 in the vicinity of the end portion on the rotary shaft 11b side, further changes its direction to enter the return passage surrounded by the heat transfer unit 32c and the return passage wall 32b', and advances toward the return pipe 32b while cooling the heat transfer unit 32c.

The refrigerant gas cools the superconducting coil 31 via the heat transfer unit 32c or cools the superconducting coil 31 via the heat transfer unit 32c and the heat transfer plate 34, and then cools the current lead 33 via the heat transfer unit 32c and the current lead cooling stage 36. The current lead 33, which occupies a portion having a large thermal load, is cooled by the refrigerant gas that has cooled the superconducting coil 31, and thus does not affect the cooling of the superconducting coil 31.

Although the heat transfer plate 34 has a shape similar to a hexagonal prism in the example shown in FIG. 4, this shape is an example and is not limited thereto. The heat transfer plate 34 may have, for example, a cylindrical shape. If the heat transfer plate 34 has a cylindrical shape, arranging the superconducting coil 31 on its circumferential surface can reduce the total distance between the refrigerant gas passing through the inner surface of the heat transfer plate 34 and the superconducting coil 31, and reduce the temperature difference due to the heat conduction between the refrigerant gas and the superconducting coil 31. Also, if the current lead cooling stage 36 is connected to the surface of the end portion of the cylindrical heat transfer plate 34 in the axial direction of the rotor, the heat transfer area of the connection surface can be increased, and the heat transfer efficiency can be enhanced.

### (Electrical Connection Relationship Between Superconducting Coil 31 and Brush 12c)

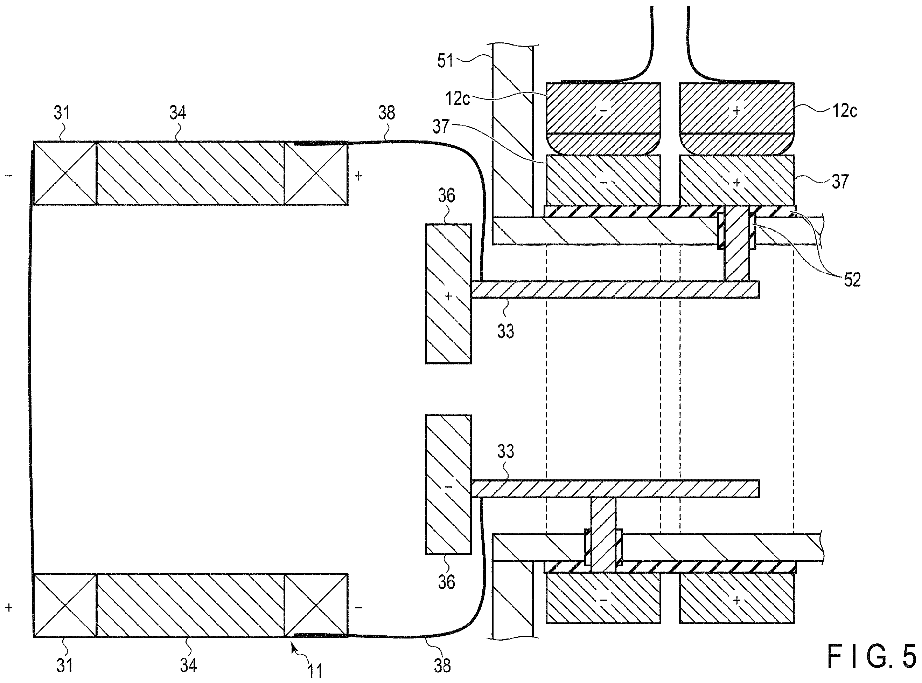

FIG. 5 is a conceptual diagram showing an example of an electrical connection relationship between the superconducting coil 31 and the brush 12c shown in FIG. 3. Here, in order to facilitate understanding of the structures of the main parts, some of the dimensions of the respective parts shown in the drawings are made larger or smaller than the actual dimensions. Thus, the dimensional relationship between the respective parts shown in the drawings differs from the actual one.

As shown in FIG. 5, the electrical connection between the superconducting coil 31 and the brush 12c is made through a lead wire 38, the current lead 33, and the slip ring 37.

The lead-out portion of the superconducting coil 31 includes those corresponding to positive (+) and those corresponding to negative (-), each of which is electrically connected to the current lead 33 through the lead wire 38, the current lead 33 is electrically connected to the slip ring 37, and the slip ring 37 conducts electricity by coming into contact with the brush 12c on the fixing unit 12 side.

The slip ring 37 is arranged on, for example, a vacuum container wall 51, which is a part of the vacuum container 41. A part of the current lead 33 is passed through a through-hole provided in advance in the vacuum container wall 51 in order to be electrically connected to the slip ring 37. However, in order to secure insulation between the vacuum container wall 51 and the slip ring 37 and insulation between the vacuum container wall 51 and the current lead 33, an insulator 52 is arranged between them.

### (Structure Near Pipe Communication Portion Q)

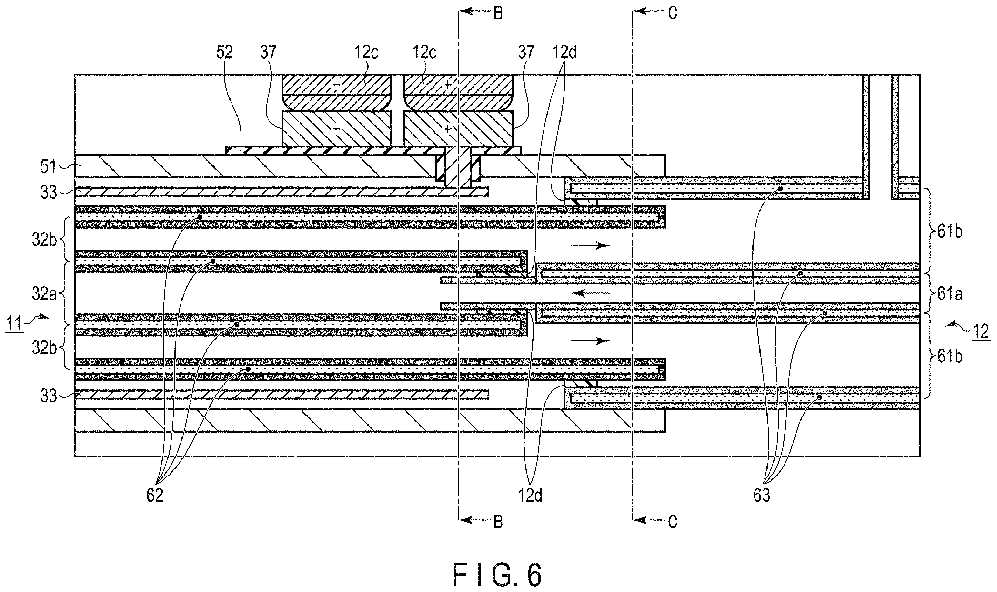

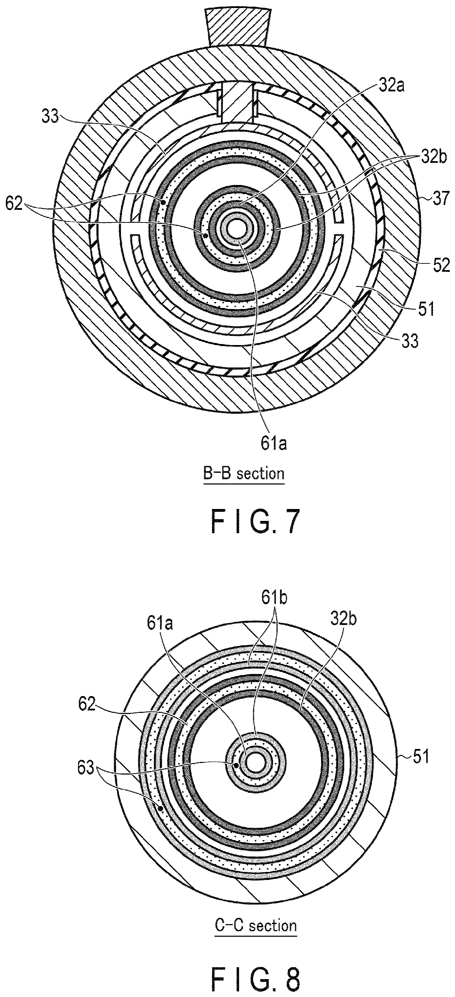

FIG. 6 is a cross-sectional diagram showing an example of a structure near the pipe communication portion Q shown in FIG. 2. FIG. 7 is a cross-sectional diagram showing an example of a cross-sectional shape of the structure shown in FIG. 6 taken along the line B-B. FIG. 8 is a cross-sectional diagram showing an example of a cross-sectional shape of the structure shown in FIG. 6 taken along the line C-C. Here, in order to facilitate understanding of the structures of the main parts, some of the dimensions of the respective parts shown in the drawings are made larger or smaller than the actual dimensions. Thus, the dimensional relationship between the respective parts shown in the drawings differs from the actual one.

In addition, FIGS. 6 to 8 show the pipe on the rotary unit 11 side in dark gray and show the pipe on the fixing unit 12 side in light gray in order to easily distinguish the pipe on the rotary unit 11 side from the pipe on the fixing unit 12 side.

As described above, the supply pipe 32a and the return pipe 32b, which are concentrically arranged, are disposed on the rotary unit 11 side. Likewise, a supply pipe 61a and a return pipe 61b, which are concentrically arranged, are disposed on the fixing unit 12 side. The supply pipe 61a and the return pipe 61b are arranged such that their longitudinal directions are parallel to the axial direction of the rotary shaft 11b, and that the return pipe 61b is arranged to surround the supply pipe 61a on the outer diameter side of the supply pipe 61a.

The supply pipe 61a on the rotary unit 11 side communicates with the supply pipe 32a on the rotary unit 11 side. Specifically, a part of the supply pipe 61a (a portion extending in the axial direction) is inserted into the inner diameter side of a part of the supply pipe 32a, and the sealer 12d for sealing a gap formed between the part of the supply pipe 61a and the part of the supply pipe 32a is provided.

The return pipe 32b on the rotary unit 11 side communicates with the return pipe 61b on the rotary unit 11 side. Specifically, a part of the return pipe 32b is inserted into the inner diameter side of a part of the return pipe 61b, and the sealer 12d for sealing a gap formed between the part of the return pipe 32b and the part of the return pipe 61b is provided.

A heat insulator 62 forming a vacuum heat insulating layer is arranged between the supply pipe 32a and the return pipe 32b. The heat insulator 62 insulates the refrigerant gas flowing through the supply pipe 32a from the refrigerant gas flowing through the return pipe 32b. The heat insulator 62 forming a vacuum heat insulating layer is also arranged on the outer diameter side of the return pipe 32b. The heat insulator 62 insulates the refrigerant gas flowing through the return pipe 32b from the space where the current lead 33 is present.

Likewise, a heat insulator 63 forming a vacuum heat insulating layer is arranged between the supply pipe 61a and the return pipe 61b. The heat insulator 63 insulates the refrigerant gas flowing through the supply pipe 61a from the refrigerant gas flowing through the return pipe 61b. The heat insulator 63 forming a vacuum heat insulating layer is also arranged on the outer diameter side of the return pipe 61b. The heat insulator 63 insulates the refrigerant gas flowing through the return pipe 61b from the outside air.

The refrigerant gas sent from the cooling source 2 enters the supply pipe 61a. At this time, heat penetration from the outer diameter side of the supply pipe 61a is suppressed since the heat insulator 63 is on the outer diameter side of the supply pipe 61a. Thereafter, the refrigerant gas enters the supply pipe 32a. At this time, heat penetration from the outer diameter side of the supply pipe 32a is suppressed since the heat insulator 62 is on the outer diameter side of the supply pipe 32a.

The refrigerant gas, having completed cooling the heat transfer unit 32c, enters the return pipe 32b. At this time, heat penetration from the outer diameter side of the return pipe 32b is suppressed since the heat insulator 62 is on the outer diameter side of the return pipe 32b. Thereafter, the refrigerant gas enters the return pipe 61b. At this time, heat penetration from the outer diameter side of the return pipe 61b is suppressed since the heat insulator 63 is on the outer diameter side of the return pipe 61b. Thereafter, the refrigerant gas returns to the cooling source 2 through the low-temperature blower 3.

As described above, according to the superconducting rotating electrical machine 1 of the embodiment, since heat penetration into the supply pipes 32a and 61a is blocked by the return pipes 32b and 61b and the heat insulators 62 and 63 covering the peripheries of the supply pipes 32a and 61a, the refrigerant gas passing through the supply pipes 32a and 61a can be sent into the rotor core 35 while being kept at a low temperature. Also, since the supply passage wall 32a', the return passage wall 32b', and the heat insulator 42 are in the rotor core 35, and heat penetration into the supply passage surrounded by the supply passage wall 32a' is blocked by them, the refrigerant gas supplied into the rotor core 35 can be sent to the return passage between the heat transfer unit 32c and the return passage wall 32b' while being kept at a low temperature.

Further, according to the superconducting rotating electrical machine 1 of the embodiment, since the refrigerant gas passing through the return passage between the heat transfer unit 32c and the return passage wall 32b' cools the superconducting coil 31 via the heat transfer unit 32c or cools the superconducting coil 31 via the heat transfer unit 32c and the heat transfer plate 34, and then cools the current lead 33 via the heat transfer unit 32c and the current lead cooling stage 36, the current lead 33 occupying a portion having a large thermal load can be prevented from affecting the cooling of the superconducting coil 31, and the maximum coil temperature of the superconducting rotating electrical machine can be lowered.

The temperature rise of the refrigerant gas is inversely proportional to the gas flow rate, and becomes smaller as the gas flow rate becomes larger. In order to suppress the temperature rise of the refrigerant gas, it is effective to reduce the pressure loss and increase the gas flow rate. To this end, the pipe through which the refrigerant gas flows may be thickened (increased in diameter), excluding a pipe portion that is difficult to be thinned (that is, a portion where the pipe on the rotary unit 11 side and the pipe on the fixing unit 12 side communicate with each other). In this way, the pressure loss can be reduced and the gas flow rate can be increased, thus enabling further suppression of the temperature rise of the refrigerant gas, further reduction of the maximum coil temperature, and more stable operation of the superconducting coil 31.

In the above-described embodiment, the case where a gas circulation cooling system 4 forms a single loop is described as an example; however, the gas circulation cooling system 4 may form a plurality of loops. While a cryogenic refrigerator may be used as the cooling source 2, a cryogen such as liquid hydrogen may also be used instead. In the above-described embodiment, the case where the low-temperature blower is used as the gas circulation means is illustrated; however, a circulation system composed of a compressor at room temperature and a heat exchanger may be used instead.

As detailed above, according to the embodiment, the maximum coil temperature of the superconducting rotating electrical machine can be lowered, and stable operation can be performed.

While several embodiments have been described, these embodiments have been presented by way of example and are not intended to limit the scope of the invention. The novel embodiments described herein can be implemented in a variety of other forms; furthermore, various omissions, substitutions, and changes can be made without departing from the spirit of the invention. The accompanying claims and their equivalents are intended to cover such forms or modifications as would fall within the scope and spirit of the inventions.

## Claims

1. A rotor of a superconducting rotating electrical machine, the rotor comprising:
a superconducting coil;
a current lead configured to energize the superconducting coil;
a heat transfer unit arranged for a rotor core and thermally connected to the superconducting coil and the current lead;
a supply pipe configured to supply refrigerant gas into the rotor core; and
a return pipe arranged on an outer diameter side of the supply pipe and configured to discharge the refrigerant gas that has cooled the superconducting coil via the heat transfer unit on the rotor core side,
wherein the current lead is configured to be cooled by the refrigerant gas having cooled the superconducting coil.

2. The rotor of a superconducting rotating electrical machine according to claim 1, wherein the heat transfer unit has a cylindrical shape, and the superconducting coil is arranged on a circumferential surface of the heat transfer unit.

3. The rotor of a superconducting rotating electrical machine according to claim 1, further comprising a current lead cooling stage thermally connected to the heat transfer unit and configured to cool the current lead.

4. The rotor of a superconducting rotating electrical machine according to claim 3, wherein the current lead cooling stage is thermally connected to a surface of an end portion of the heat transfer unit in an axial direction of the rotor.

5. The rotor of a superconducting rotating electrical machine according to claim 1, wherein the rotor core includes a heat insulator configured to insulate the refrigerant gas supplied from the supply pipe from the refrigerant gas sent out to the return pipe.

6. The rotor of a superconducting rotating electrical machine according to claim 5, wherein the heat insulator includes a vacuum heat insulating layer.

7. The rotor of a superconducting rotating electrical machine according to claim 1, comprising a heat insulator configured to insulate the refrigerant gas flowing through the supply pipe from the refrigerant gas flowing through the return pipe.

8. The rotor of a superconducting rotating electrical machine according to claim 7, wherein the heat insulator includes a vacuum heat insulating layer.

9. A superconducting rotating electrical machine comprising the rotor of a superconducting rotating electrical machine according to any one of claims 1 to 8.
